# EUROPÄISCHE PATENTANMELDUNG

(11) **EP 3 767 148 A1**
(43) Veröffentlichungstag der Anmeldung: **20.01.2021**
(21) Anmeldenummer: 20184792.8
(22) Anmeldetag: 08.07.2020
(51) Int. Cl.: F16L 37/092, F16L 33/22

(54) **VERBINDUNGSELEMENT FÜR EINE SCHLAUCHLEITUNG**

(30) Priorität: 18.07.2019 DE 102019119531
(71) Anmelder: AVS Römer GmbH & Co. KG, 94481 Grafenau (DE)
(72) Erfinder: Saiko, Fabian, 94481 Grafenau (DE); Mück, Andreas, 94481 Grafenau (DE)
(74) Vertreter: Manitz Finsterwald Patent- und Rechtsanwaltspartnerschaft mbB

(57) **Zusammenfassung**

Die Erfindung betrifft ein Verbindungselement für eine Schlauchleitung mit einem Grundkörper mit einer Längsachse, der einen Aufnahmeabschnitt, insbesondere einen Aufnahmeraum zur Aufnahme eines Endabschnitts der Schlauchleitung definiert, wobei der Aufnahmeabschnitt ein Anschlusselement aufweist, auf das der Endabschnitt der Schlauchleitung aufschiebbar oder aufsteckbar ist, sowie mit einem Fixierungsmittel, das die Schlauchleitung außenseitig umfasst und relativ zu dem Grundkörper axial zwischen einer Halteposition und einer Löseposition bewegbar ist, und mit einer Klemmeinrichtung, die dazu ausgebildet ist, bei einer axialen Relativbewegung zwischen dem Grundkörper und dem Fixierungsmittel aus der Löseposition in die Halteposition zumindest einen Abschnitt des Fixierungsmittels nach radial innen zu drängen, um den Endabschnitt der Schlauchleitung zumindest abschnittsweise gegen den Anschlussabschnitt zu pressen, und mit einem Sicherungselement zum Sichern des Fixierungsmittels in der Halteposition.

## Beschreibung

Die Erfindung betrifft ein Verbindungselement zum Fixieren, insbesondere lösbaren Fixieren eines Endabschnitts einer Schlauchleitung, beispielsweise an einer Vorrichtung oder an einer anderen Leitung.

Derartige Verbindungselemente sind grundsätzlich bekannt. Sie umfassen beispielsweise ein Gehäuse, das einen Aufnahmeraum zur Aufnahme eines Leitungsabschnitts aufweist und oftmals mindestens ein Fixierungsmittel zum Fixieren, insbesondere lösbaren Fixieren, des Leitungsabschnitts in dem Verbindungselement, wobei das Fixierungsmittel zwischen einer Halteposition und einer Löseposition verstellbar ist. In der Regel nimmt der Aufnahmeraum zudem mindestens ein Dichtungselement, beispielsweise einen O-Ring auf, das den Leitungsabschnitt außenseitig umgreift oder ihm axial vorgelagert ist und eine Abdichtung der Verbindung sicherstellt. Wird eine solche Abdichtung bei Verbindungen offener Endabschnitte von Schlauchleitungen verwendet, kommt es konstruktionsbedingt oftmals zur Ausbildung von Toträumen, in denen sich Schmutznester bilden können. Dies ist besonders für Anwendungen mit erhöhten Hygieneanforderungen nachteilig, da dies einen erhöhten Reinigungsbedarf nach sich zieht.

Ausgehend von diesem Stand der Technik stellt sich die vorliegende Erfindung zur Aufgabe, ein möglichst einfach zu montierendes Verbindungselement für eine Schlauchleitung zu schaffen, das eine totraumfreie Abdichtung ermöglicht und das zuverlässig gegen versehentliches Lösen der Schlauchleitung aus der Verbindung gesichert ist.

Diese Aufgabe wird durch ein Verbindungselement mit den Merkmalen des Anspruchs 1 gelöst.

Erfindungsgemäß umfasst ein Verbindungselement einen Grundkörper mit einer Längsachse, der einen Aufnahmeabschnitt, insbesondere einen Aufnahmeraum zur Aufnahme eines Endabschnitts der Schlauchleitung definiert, wobei der Aufnahmeabschnitt ein Anschlusselement aufweist, auf das der Endabschnitt der Schlauchleitung aufschiebbar oder aufsteckbar ist. Zudem umfasst es ein Fixierungsmittel, das die Schlauchleitung außenseitig umfasst und das relativ zu dem Grundkörper axial zwischen einer Halteposition und einer Löseposition bewegbar ist, sowie eine Klemmeinrichtung, die dazu ausgebildet ist, bei einer axialen Relativbewegung zwischen dem Grundkörper und dem Fixierungsmittel aus der Löseposition in die Halteposition zumindest einen Abschnitt des Fixierungsmittels nach radial innen zu drängen, um den Endabschnitt der Schlauchleitung zumindest abschnittsweise gegen den Anschlussabschnitt zu pressen. Zudem umfasst das Verbindungselement ein Sicherungselement zum Sichern des Fixierungsmittels in der Halteposition.

Mittels des Sicherungselements kann das Fixierungsmittel relativ zu dem Grundkörper in der Halteposition derart fixiert werden, dass ein versehentliches Verschieben des Fixierungsmittels in die Löseposition verhindert wird. Auf diese Weise ist eine erhöhte Zuverlässigkeit der Verbindung der Schlauchleitung gewährleistet.

Unter einer Schlauchleitung kann in diesem Zusammenhang eine hohle Leitung verstanden werden, insbesondere mit einem runden Querschnitt, die zumindest teilweise elastisch verformbar ist. Insbesondere kann die Schlauchleitung durch den Eingriff des Fixierungsmittels soweit elastisch verformt werden, dass eine zuverlässige Abdichtung der Verbindung durch Anpressen der Leitung an den Anschlussabschnitt des Grundkörpers erreicht wird.

Insbesondere weist der Grundkörper des Verbindungselements eine Eingangsöffnung und eine Ausgangsöffnung auf. Von Seiten der Eingangsöffnung kann die Schlauchleitung in das Verbindungselement eingeführt werden, insbesondere durch entsprechende Öffnungen in dem Grundkörper und in dem Fixierungsmittel. Der Grundkörper kann bezüglich seiner sich zwischen Eingangs- und Ausgangsöffnung erstreckenden Längsachse zumindest annähernd rotationssymmetrisch ausgeformt sein. Dies gilt insbesondere für den Aufnahmeabschnitt des Grundkörpers, der dazu vorgesehen ist, den oftmals ebenfalls rotationssymmetrischen Endabschnitt der Schlauchleitung aufzunehmen. Der Aufnahmeabschnitt kann z.B. als ringspaltförmige Aussparung in dem Grundkörper ausgebildet sein, in die die Mantelfläche der Schlauchleitung eingeführt wird.

Der Grundkörper kann einen Bereich aufweisen, der zur Befestigung an zumindest einem gleichartigen Verbindungselement, einem andersartigen Verbindungselement, oder einer Vorrichtung ausgebildet ist.

Der Aufnahmeabschnitt weist ein Anschlusselement zum Aufschieben oder Aufstecken des Endabschnitts der Schlauchleitung auf, das beispielsweise die Form eines Hohlzylinders aufweisen kann, dessen Außendurchmesser zumindest im Wesentlichen mit dem Innendurchmesser der Schlauchleitung übereinstimmen kann oder - bei einer elastischen Leitung - etwas größer sein kann. Um den Aufschiebe- oder Aufsteckvorgang der Schlauchleitung auf das Anschlusselement zu erleichtern, kann das Anschlusselement zumindest abschnittsweise von der Zylinderform abweichen. Beispielsweise kann das Anschlusselement sich zu der Schlauchleitung hin konisch verjüngen oder angefast sein. Dabei kann eine Schräge von wenigen Grad in Bezug auf die Längsachse ausreichen.

Die Fixierung der Schlauchleitung an dem Verbindungselement erfolgt in einer Halteposition durch ein Fixierungsmittel, das die Schlauchleitung von radial außen umgreift und an das Anschlusselement presst, wobei der Endabschnitt der Schlauchleitung von radial innen durch das Anschlusselement abgestützt wird. Relativ zu dem Grundkörper ist das Fixierungsmittel axial bewegbar, insbesondere zwischen der Halte- und einer Löseposition. Eine Klemmeinrichtung drängt das Fixierungsmittel bei der Bewegung von der Löse- in die Halteposition zumindest abschnittsweise radial nach innen und bringt das Fixierungsmittel so in fixierenden Eingriff mit der Außenseite der Schlauchleitung. In der Löseposition ist das Fixierungsmittel nicht in fixierendem Eingriff mit der Schlauchleitung, sodass diese nicht mehr an das Anschlusselement gepresst wird und aus dem Verbindungselement entfernt werden kann. Die Schlauchleitung ist in der Löseposition also in axialer Richtung recht leicht bewegbar.

Das Fixierungsmittel kann beispielsweise als Klemmring, als Spannzange, als Klemmhülse oder andersartig ausgebildet sein.

Die Halteposition kann einer Position des Fixierungsmittels entsprechen, in der das Fixierungsmittel in axialer Richtung von dem Grundkörper um einen minimalen axialen Versatz beabstandet ist, der zur sicheren Fixierung der Schlauchleitung an dem Grundkörper führt, oder entsprechend weit in den Grundkörper eingeführt ist. Eine Löseposition kann entsprechend eine Position sein, in der das Fixierungsmittel weniger weit als der minimale axiale Versatz von dem Grundkörper beabstandet ist oder weiter in diesen eingeführt ist.

Befindet sich das Fixierungsmittel in der Halteposition, kann das Sicherungselement derart an dem Verbindungselement angebracht werden, dass das Fixierungsmittel relativ zu dem Grundkörper mit dem minimalen axialen Versatz verspannt ist, sodass ein Verschieben des Fixierungsmittels in die Löseposition nicht möglich ist.

Weitere Ausführungsformen der Erfindung sind in den Ansprüchen, der Beschreibung und der Zeichnung angegeben.

Gemäß einer Ausführungsform ragt das Fixierungsmittel zumindest abschnittsweise in den Aufnahmeabschnitt des Grundkörpers. Insbesondere kann das Fixierungsmittel in der Halte- sowie in der Löseposition zumindest teilweise in den Grundkörper ragen. Der Grundkörper sowie das darin zumindest teilweise aufgenommene Fixierungsmittel können zusammenwirken, um die Halte- und Löseposition wirksam herzustellen.

Beispielsweise ist das Fixierungsmittel derart ausgebildet, dass die Schlauchleitung in der Halteposition durch das Fixierungsmittel in dichtende Anlage mit einem dem Fixierungsmittel zugewandten Endabschnitt des Anschlusselements bringbar ist. Die dadurch erreichte Abdichtung ist besonders vorteilhaft, da sie totraumfrei ist.

Das Fixierungsmittel kann eine radial innenliegende Klemmkante und/oder Klemmfläche aufweisen, die sich in der Halteposition in Eingriff mit der Außenseite der Schlauchleitung befindet. Eine solche Klemmkante und/oder Klemmfläche kann beispielsweise durch einen zahnförmig oder hakenförmig ausgebildeten Bereich der radial innenliegenden Seite eines Abschnitts des Fixierungsmittel ausgebildet werden. Die Klemmkante und/oder Klemmfläche kann eine besonders effiziente Abdichtung der Schlauchleitung an dem Anschlusselement in der Halteposition erzielen. Je nach Anwendung ist das Fixierungsmittel und/oder die Klemmkante und/oder Klemmfläche bevorzugt so beschaffen, dass sie die Schlauchleitung ausschließlich elastisch verformt und keine Schnitte, Risse oder Bruchstellen in der Schlauchleitung hinterlässt.

Bevorzugt weist das Fixierungsmittel eine oder mehrere sich axial erstreckende Klemmzungen auf, die in radialer Richtung federnd auslenkbar sind. Insbesondere wird die Auslenkung der Klemmzungen nach radial innen durch die Klemmeinrichtung des Verbindungselements bewirkt, die Auslenkung nach radial außen durch eine Löseeinrichtung des Verbindungselements. Beispielsweise sind zwischen den Klemmzungen in axialer Richtung Aussparungen vorgesehen. Werden die Klemmzungen in der Halteposition nach radial innen auf die Schlauchaußenseite gepresst, wird dadurch eine Überlagerung der einzelnen Klemmzungen vermieden und der Anpressdruck dadurch zumindest annähernd gleichförmig entlang des gesamten Schlauchumfangs aufgebracht.

Der Grundkörper des Verbindungselements kann zweiteilig ausgebildet sein und einen Sockel und einen Mantel aufweisen, die mittels Verschrauben, Aufstecken, Aufpressen, Verrasten oder anderweitig miteinander verbunden sind. Sockel und Mantel können verklebt oder verschweißt sein. Der zweiteilige Aufbau kann in Bezug auf die Fertigung des Grundkörpers vorteilhaft sein. Dabei können unterschiedliche Teile der Klemm- und/oder Löseeinrichtung an oder in dem Sockel oder Mantel angeordnet sein.

Die Klemmeinrichtung kann zumindest ein erstes Steuerelement und zumindest ein zweites Steuerelement umfassen, wobei das erste Steuerelement radial innenseitig in dem Grundkörper angeordnet sein kann und das zweite Steuerelement radial außenseitig an dem Fixierungsmittel angeordnet sein kann. Das erste und das zweite Steuerelement können derart zusammenwirken, dass bei einer axialen Relativbewegung zwischen dem Grundkörper und dem Fixierungsmittel aus der Löseposition in die Halteposition zumindest ein Abschnitt des Fixierungsmittels, gegebenenfalls die Klemmzungen mit Klemmflächen, nach radial innen gedrängt wird.

Alternativ oder zusätzlich kann eine Löseeinrichtung vorgesehen sein, die zumindest ein drittes Steuerelement und zumindest ein viertes Steuerelement umfasst, wobei das dritte Steuerelement in dem Aufnahmeabschnitt des Grundkörpers angeordnet sein kann und das vierte Steuerelement an dem Fixierungselement, insbesondere an seinem dem Grundkörper zugewandten Ende angeordnet sein kann. Das dritte und das vierte Steuerelement können derart zusammenwirken, dass bei einer axialen Relativbewegung zwischen dem Grundkörper und dem Fixierungsmittel aus der Halteposition in die Löseposition zumindest ein Abschnitt des Fixierungsmittels nach radial außen gedrängt wird. Der Grundkörper kann dafür eine Aussparung zur Aufnahme des nach außen gedrängten Abschnitts des Fixierungsmittels aufweisen.

Das erste Steuerelement und/oder das zweite Steuerelement und/oder das dritte Steuerelement und/oder das vierte Steuerelement können jeweils zumindest eine insbesondere eben ausgebildete Steuerfläche umfassen, die geneigt oder schräg zu der Längsachse angeordnet sein kann. Das erste Steuerelement kann beispielsweise durch einen konisch verlaufenden Bereich der inneren Oberfläche des Grundkörpers ausgebildet sein. Entsprechend kann das zweite Steuerelement durch eine (abschnittsweise) konisch verlaufende äußere Oberfläche des Fixierungselements ausgebildet sein. Es kann aber auch jeweils eines von zwei zusammenwirkenden Steuerelementen als Steuerkante ausgebildet sein. Bei einer axialen Bewegung relativ entlang einer entsprechend ausgebildeten Steuerfläche gleitet die Steuerkante auf dieser und wird radial ausgelenkt.

Gemäß einer Ausführungsform weist das Fixierungsmittel an einem der Klemmeinrichtung abgewandten Endabschnitt einen sich in radialer Richtung nach außen erstreckenden Kragen auf. Der Kragen kann außerhalb des Grundkörpers positioniert sein. Insbesondere kann der Kragen so dimensioniert sein, dass sein Durchmesser größer ist als die Eingangsöffnung des Grundkörpers, sodass das Fixierungsmittel nicht gänzlich in dem Grundkörper aufgenommen sein kann. Beispielsweise sind der dem Kragen zugewandte Endabschnitt des Grundkörpers und eine dem Grundkörper zugewandte Fläche des Kragens so ausgestaltet, dass sie mittels des Sicherheitselements wirksam gegeneinander verspannt werden können. Von dem Bereich des Kragens können sich axial in Richtung des Grundkörpers bzw. in den Grundkörper hinein Klemmzungen des Fixierungsmittels erstrecken. Der Kragen des Fixierungsmittels kann als Griffeinrichtung zum Betätigen der Klemmeinrichtung bzw. der Löseeinrichtung dienen.

Gemäß einer Ausführungsform ist das Sicherungselement, insbesondere ein abschnittsweise offener Sicherungsring, in der Halteposition in axialer Richtung zwischen einem Abschnitt des Fixierungsmittels, insbesondere dem Kragen des Fixierungsmittels und einem Endabschnitt des Grundkörpers einsetzbar. Das Sicherungselement kann eine axiale Erstreckung aufweisen, die dem minimalen axialen Versatz des Fixierungsmittels relativ zu dem Grundkörper zwischen der Halteposition und der Löseposition entspricht. Dabei ist unter der axialen Erstreckung des Sicherungselements die Erstreckung in Richtung der Längsachse des Grundkörpers des Verbindungselements in einem montierten Zustand des Sicherungselements zu verstehen. Dies ist ebenso zu verstehen, wenn das Sicherungselement nicht in einem montierten Zustand betrachtet wird. Das Sicherungselement sichert durch seine axiale Erstreckung das Fixierungsmittel und den Grundkörper in einer axialen Relativposition zueinander, die dem minimalen axialen Versatz der Halteposition entspricht. Das Sicherungselement kann auch als Splint, Bolzen, Klammer, Hülse oder anderweitig ausgebildet sein.

Gemäß einer Ausführungsform ist das Sicherungselement als Sicherungsring, beispielsweise nach Art eines Sprengrings ausgebildet, der abschnittsweise offen ausgestaltet ist, sodass er beispielsweise über einen sich an den Kragen anschließenden Bereich des Fixierungsmittels geschoben werden kann und so den Grundkörper und das Fixierungsmittel in einer definierten Relativposition zueinander verspannt. Um eine sichere Festlegung des Rings an dem Fixierungsmittel zu erreichen, sollte die Öffnung des Sicherungsrings weniger als den halben Umfang betragen. Ein solcher Sicherungsring kann, insbesondere in den der Öffnung des Rings benachbarten Bereichen, Abschnitte aufweisen, die radial nach außen hervorstehen und von der Ringform abweichen. Dadurch wird einerseits das "Einfädeln" des Sicherungsrings auf das Fixierungsmittel erleichtert, andererseits können solche Abschnitte das Lösen des Sicherungsrings vom Fixierungsmittel erleichtern.

Das Sicherungselement kann Bereiche unterschiedlicher axialer Erstreckung aufweisen. Beispielsweise kann ein erster Bereich eine axiale Erstreckung aufweisen, die kleiner als der minimale axiale Versatz ist und ein zweiter Bereich kann eine axiale Erstreckung aufweisen, die zumindest im Wesentlichen dem minimalen axialen Versatz entspricht.

Beispielsweise kann ein teilweise offen ausgestalteter Sicherungsring im Bereich der Öffnung eine axiale Erstreckung aufweisen, die kleiner ist als der minimale axiale Versatz, was der Löseposition entspricht, sodass das Sicherungselement in der Löseposition in das Verbindungselement eingesetzt werden kann. Die axiale Erstreckung des Sicherungselements kann sich dann über den Durchmesser des Verbindungselements hin derart vergrößern, dass sie in einem anderen Bereich, insbesondere einem der Öffnung gegenüberliegenden Bereich, dem minimalen axialen Versatz entspricht, was der Halteposition entspricht. Wenn der Übergang zwischen den Bereichen mit verschiedenem axialen Versatz kontinuierlich verläuft, kann das Sicherungselement als Steuerelement wirken, das in der Löseposition in das Verbindungselement eingesetzt werden kann und beim weiteren Aufschieben das Fixierungsmittel relativ zum Grundkörper axial in die Halteposition verschiebt. Um von der Halteposition wieder in die Löseposition zu gelangen, muss ein derart ausgestaltetes Sicherungselement aus dem Verbindungselement entfernt werden.

Um den Komfort und die Zuverlässigkeit des Verbindungselements zu erhöhen, kann das Sicherungselement an dem Verbindungselement vormontiert sein und/oder unverlierbar an dem Verbindungselement befestigt sein. Insbesondere kann das Sicherungselement derart ausgestaltet sein, dass eine Verstellung zwischen der Halteposition und der Löseposition möglich ist, ohne dass das Sicherungselement von dem Verbindungselement entfernt werden muss.

Ein entsprechendes Sicherheitselement kann zwischen einer ersten Position und einer zweiten Position verschiebbar sein, wobei die Löseposition eingestellt ist, wenn der erste Bereich des Sicherungselements zwischen einem Abschnitt des Fixierungsmittels und dem Grundkörper angeordnet ist und wobei die Halteposition eingestellt ist, wenn der zweite Bereich des Sicherungselements zwischen einem Anschnitt des Fixierungsmittels und dem Grundkörper angeordnet ist.

Ein solches vormontiertes Sicherungselement kann beispielsweise die Form zweier verbundener Ringe aufweisen, ähnlich einer Acht, insbesondere einer teilweise offenen Acht. Die axiale Erstreckung des einen Rings kann zum Beispiel dem minimalen axialen Versatz entsprechen, sodass das Fixierungsmittel in der Halteposition festgelegt wird. Die axiale Erstreckung des anderen Rings kann zum Beispiel kleiner als der minimale axiale Versatz sein, sodass das Fixierungsmittel in die Löseposition gebracht werden kann, wenn dieser erste Bereich des Sicherungselements zwischen Fixierungsmittel und Grundkörper angeordnet ist.

Gemäß einer weiteren Ausführungsform umfasst eine Verbindungseinheit zumindest zwei Verbindungselemente gemäß zumindest einer der zuvor beschriebenen Ausführungsformen. Eine solche Verbindungseinheit kann dazu ausgebildet sein, zumindest zwei Schlauchleitungen miteinander zu verbinden, wobei die Grundkörper der Verbindungselemente mittels eines Kopplungsbereichs aneinander gekoppelt oder einstückig ausgebildet sein können. Der Kopplungsbereich kann integraler Bestandteil eines oder mehrerer oder aller zu verbindenden Grundkörper sein. Insbesondere können zwei Verbindungselemente der Verbindungseinheit koaxial angeordnet sein, sodass ihre Durchgangsöffnungen und Grundkörper sowie Fixierungsmittel eine gemeinsame Längsachse aufweisen. Insbesondere können die Verbindungselemente der Verbindungseinheit symmetrisch zu einer Ebene senkrecht zu der Längsachse angeordnet sein, entsprechend symmetrisch zu einer Mittelquerschnittsfläche.

Es können zudem auch mehr als zwei Verbindungselemente in einer Verbindungseinheit umfasst sein. Dabei kann der Kopplungsbereich so ausgebildet sein, dass die Grundkörper und Fixierungsmittel der einzelnen Verbindungselemente unter beliebigen Winkeln zueinander angeordnet sind.

In den beigefügten Figuren sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: einen Querschnitt durch eine erste Ausführungsform der Verbindungseinheit mit zwei erfindungsgemäßen Verbindungselementen in einem Grundzustand;
- Fig. 2A: die erste Ausführungsform aus Fig. 1 in einem vormontierten Zustand und eine Ausführungsform eines Sicherungselements;
- Fig. 2B: die erste Ausführungsform aus Fig. 1 in einem montierten Zustand;
- Fig. 3: einen Querschnitt durch eine zweite Ausführungsform der erfindungsgemäßen Verbindungseinheit in dem Grundzustand;
- Fig. 4A: die zweite Ausführungsform aus Fig. 3 in einem vormontierten Zustand;
- Fig. 4B: die zweite Ausführungsform aus Fig. 3 in einem montierten Zustand;
- Fig. 5: eine erste Ausführungsform eines vormontierbaren Sicherungselements;
- Fig. 6A: die erste Ausführungsform aus Fig. 1 mit einem vormontierbaren Sicherungselement in einem vormontieren Zustand und einem montierten Zustand;
- Fig. 6B: die zweite Ausführungsform aus Fig. 3 mit dem vormontierbaren Sicherungselement in einem vormontieren Zustand und einem montierten Zustand;
- Fig. 7: eine zweite Ausführungsform eines vormontierbaren Sicherungselements.

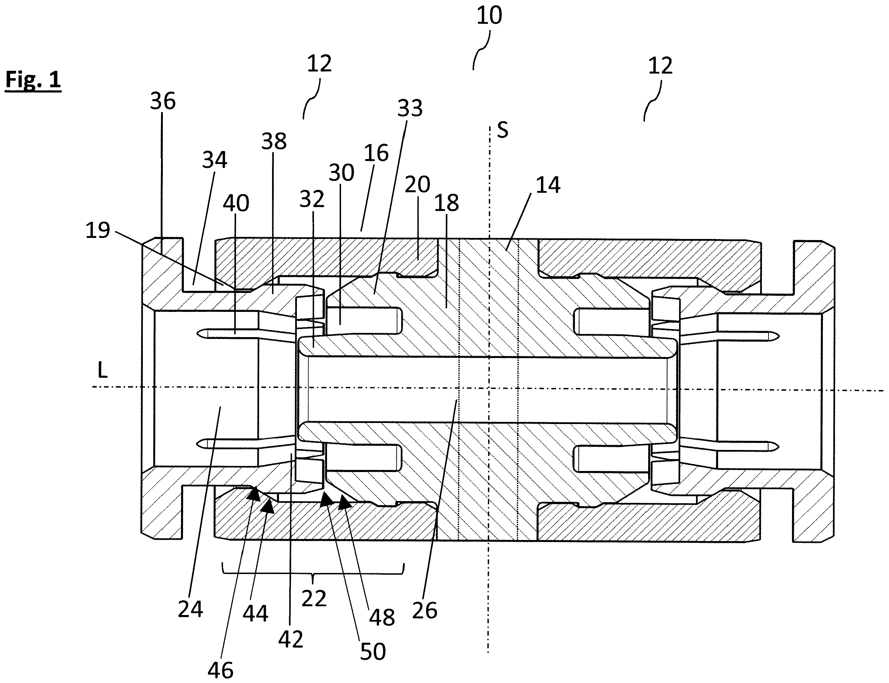

Fig. 1 zeigt eine Verbindungseinheit 10 aus zwei Verbindungselementen 12 und einem Kopplungsstück 14, das im vorliegenden Ausführungsbeispiel integral mit den Grundkörpern 16 der Verbindungselemente 12 verbunden ist. Die Verbindungseinheit 10 ist zumindest im Wesentlichen bezüglich einer Symmetrieebene S spiegelsymmetrisch und bezüglich einer Längsachse L rotationssymmetrisch ausgebildet. Die Verbindungseinheit 10 dient zur Verbindung zweier Schlauchleitungen (nicht gezeigt), beispielsweise zweier flexibler Schläuche. Jedes der Verbindungselemente 12 könnte auch alleine als Adapter oder Verbinder für eine Schlauchleitung mit einer Vorrichtung eingesetzt werden.

Da die Verbindungseinheit 10 symmetrisch ist, wird im nachfolgenden zur Vermeidung von Wiederholungen nur das links der Ebene S liegende Verbindungselement 12 der Verbindungseinheit 10 beschrieben.

Jedes Verbindungselement 12 weist einen Grundkörper 16 auf, der zweiteilig aus einem Sockel 18 und einem Mantel 20 ausgebildet ist. Der Mantel 20 ist in der gezeigten Ausführungsform auf den Sockel 18 aufgepresst. Der Grundkörper 16 weist einen Aufnahmeabschnitt 22 mit einer Eingangsöffnung 24 und einer Ausgangsöffnung 26 auf. Der Aufnahmeabschnitt 22 umfasst im gezeigten Ausführungsbeispiel einen Aufnahmeraum 30 in Form eines Ringspalts, in den ein Endabschnitt einer Schlauchleitung eingeführt werden kann. Die Schlauchleitung wird dabei auf ein Anschlusselement 32 aufgeschoben, das sich von dem Sockel 18 erstreckt und das an seinem freien Ende zur Vereinfachung der Aufnahme des Schlauchendes angefast ist. Der Ringspalt wird letztlich von dem im Wesentlichen hülsenartigen Anschlusselement 32 und einem Befestigungsabschnitt 33 definiert, der zur Kopplung des Mantels 20 mit dem Sockel 18 dient.

Der Aufnahmeabschnitt 22 des Grundkörpers 16 nimmt ein Fixierungsmittel 34 teilweise auf, wie hier gezeigt eine Halte-/Lösekralle 34. Die Halte-/Lösekralle 34 weist an einem außerhalb des Grundkörpers 16 gelegenen Endabschnitt einen Kragen 36 auf, der sich radial nach außen erstreckt. Von dem Endabschnitt mit dem Kragen 36 aus erstrecken sich in der gezeigten Ausführungsform mehrere Klemmzungen 38 axial in den Aufnahmeabschnitt 22 hinein. Die Klemmzungen 38 sind in axialer Richtung durch Aussparungen 40 voneinander beabstandet. Die Klemmzungen 38 sind in radialer Richtung aus dem gezeigten Grundzustand nach radial innen und radial außen federnd auslenkbar. Zudem weisen die Klemmzungen 38 eine radial innen liegende Klemmkante 42 auf zum sicheren Eingriff in die äußere Oberfläche einer Schlauchleitung in einem montierten Zustand der Verbindungseinheit 10.

Zur Montage kann das Fixierungsmittel 34 von der Eingangsöffnung 24 her in den aus Mantel 20 und Sockel 18 vormontierten Grundkörper 16 hineingedrückt werden. Die flexiblen Klemmzungen 38 werden dabei durch eine konische Einführhilfe 19 an dem offenen Ende des Mantels 20 radial nach innen zusammengedrückt, entspannen sich dann innerhalb des Aufnahmeabschnitts 22 wieder in den Grundzustand, in dem der Außendurchmesser der Klemmzungen 38 den Innendurchmesser der engsten Stelle einer Eingangsöffnung 24 des Grundkörpers 16 übersteigt. Dadurch ist das Fixierungsmittel 34 unverlierbar mit dem Grundkörper 16 verbunden.

Insgesamt weisen das Fixierungsmittel 34 und der Grundkörper 16 vier Steuerelemente 44, 46, 48 und 50 auf. Die Steuerelemente 44 und 48 sind in dem Grundkörper 16 angeordnet und wirken zusammen mit den Steuerelementen 46 bzw. 50, die an dem Fixierungsmittel 34 angeordnet sind.

Eine Klemmeinrichtung wird durch die Steuerelemente 44 und 46 gebildet. Im vorliegenden Ausführungsbeispiel sind die Steuerelemente 44 und 46 als im Querschnitt ebene Steuerflächen ausgebildet. Die Steuerfläche 44 wird dabei durch einen konisch ausgeformten Abschnitt der inneren Oberfläche des Grundkörpers 16 gebildet, in diesem Fall von dem Mantel 20 des Grundkörpers 16. In Richtung von dem Sockel 18 zu der Eingangsöffnung 24 des Grundkörpers gesehen verjüngt sich dabei der innere Durchmesser des Grundkörpers im Bereich der Steuerfläche 44. Als Gegenstück ist die Steuerfläche 46 durch einen konischen ausgeformten Abschnitt der äußeren Oberfläche des Fixierungsmittels 34 gebildet. Bewegt man das Fixierungsmittel 34 relativ zu dem Grundkörper 16 in axialer Richtung aus dem Grundkörper 16 heraus, so wird die Steuerfläche 46 durch die konisch zulaufende Steuerfläche 44 radial zunehmend nach innen gedrängt, sodass die federnden Klemmzungen 38 nach radial innen ausgelenkt werden.

Eine Löseeinrichtung wird durch die Steuerelemente 48 und 50 gebildet. Das Steuerelement 48 ist im gezeigten Ausführungsbeispiel eine Steuerfläche 48, die an dem Befestigungsabschnitt 33 durch eine konisch zulaufende Oberfläche gebildet wird, die einen sich in Richtung zu der Ausgangsöffnung 26 des Grundkörpers 16 hin gesehen vergrößernden Außendurchmesser aufweist. Im gezeigten Ausführungsbeispiel ist das an dem freien Ende des Fixierungsmittels 34 angeordnete Steuerelement 50 als Steuerkante 50 ausgebildet. Bei einer axialen Bewegung des Fixierungsmittels 34 in Richtung in den Grundkörper 16 hinein läuft die Steuerkante 50 auf der Fläche 48 auf, sodass die Klemmzungen 38 nach radial außen gedrängt werden.

Entsprechend ergibt sich ein Abstand zwischen einem bei der Eingangsöffnung 24 gelegenen Endabschnitt des Grundkörpers 16 und dem Kragen 36 des Fixierungsmittels 34, bei dem die Klemmzungen 38 durch die Klemmeinrichtung der Steuerelemente 44 und 46 soweit nach radial innen gedrängt sind, dass eine Schlauchleitung in dichtende Anlage mit dem Anschlusselement 32 gebracht wird, im gezeigten Ausführungsbeispiel insbesondere mit dem der Eingangsöffnung 24 zugewandten Endabschnitt des Anschlusselements 32. Dieser Abstand wird im Folgenden als der minimale axiale Versatz dₘᵢₙ bezeichnet und definiert die Halteposition.

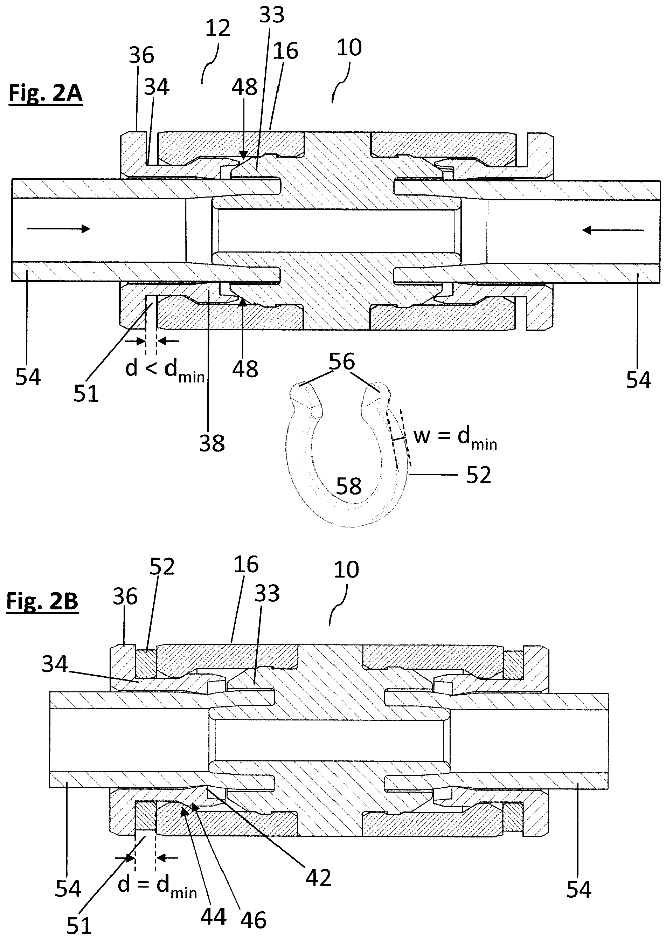

Fig. 2A zeigt die Verbindungseinheit 10 aus Fig. 1 und ein Sicherungselement 52, hier in Form eines teilweise offenen Sicherungsrings, sowie die Endabschnitte zweier Schlauchleitungen 54, die in die Verbindungseinheit 10 eingeführt sind. Beim Einsteckvorgang der Schlauchleitung 54 in das Verbindungselement 12 wird die Halte-/Lösekralle 34 mit in das Verbindungselement 12 gezogen, wobei die Klemmzungen 38 durch die Wirkung der Steuerfläche 48 aufgespreizt werden, sodass die Schlauchleitung 54 axial bewegbar und auf das Anschlusselement 32 aufschiebbar ist. Die Klemmzungen 38 sind in der gezeigten Löseposition derart nach radial außen gedrängt, dass die Klemmkanten 42 nicht in fixierendem Eingriff mit der Schlauchleitung 54 stehen.

In dem in Fig. 2A gezeigten vormontierten Zustand ist der Kragen 36 des Fixierungselements 34 von dem bei der Eingangsöffnung 24 gelegenen Endabschnitt des Grundkörpers 16 um weniger als den minimalen axialen Versatz d < dₘᵢₙ beabstandet (siehe Spalt 51). Diese Relativstellung des Fixierungselements 34 und des Grundkörpers 16 ist eine Löseposition.

Das gezeigte Sicherungselement 52 weist in Umfangsrichtung zumindest im Wesentlichen eine konstante axiale Erstreckung oder Dicke w auf, die dem minimalen axialen Versatz dₘᵢₙ entspricht. In der Löseposition ist die Dicke w größer als der Abstand d zwischen dem Grundkörper 16 und dem Kragen 36 des Fixierungselements 34. Das Sicherungselement 52 kann daher im gezeigten vormontierten Zustand nicht in den Spalt 51 eingesetzt werden.

Das Sicherungselement 52 kann so ausgestaltet sein, dass es in dem Bereich 56, der zur Führung des Sicherungselements 52 beim Aufstecken auf das Fixierungsmittel 34 vorgesehen ist, eine axiale Erstreckung oder Breite aufweist, die kleiner ist als der minimale axiale Versatz und sich dann bezüglich seiner axialen Erstreckung kontinuierlich aufweitet, bis es in einem dem Bereich 56 gegenüber gelegenen Bereich 58 eine axiale Erstreckung aufweist, die dem minimalen axialen Versatz entspricht. So kann das Sicherungselement 52 auf ein Verbindungselement 12, das sich nach Einschieben einer Schlauchleitung 54 in der Löseposition befindet, aufgeschoben werden und dazu dienen, das Fixierungsmittel 34 von der Löse- in die Halteposition zu verschieben und es dann dort zu sichern.

Fig. 2B zeigt die Verbindungseinheit 10 mit den Schlauchleitungen 54 aus Fig. 2A in einem montierten Zustand. Verglichen mit Fig. 2A ist das Fixierungsmittel 34 relativ zu dem Grundkörper 16 in Richtung aus dem Grundkörper 16 heraus bewegt worden. Der Abstand zwischen dem Grundkörper 16 und dem Kragen 36 des Fixierungsmittels 34 beträgt nun den minimalen axialen Versatz d = dₘᵢₙ. Während der axialen Rückwärtsbewegung des Fixierungsmittels 34 wurden die Steuerelemente 44 und 46 der Klemmeinrichtung in Eingriff gebracht und die Klemmzungen 38 radial nach innen gedrängt, sodass sich die Klemmkanten 42 in fixierendem Eingriff mit der Außenseite der Schlauchleitung 54 befinden und die Schlauchleitung 54 dichtend an den der Eingangsöffnung 24 zugewandten Endabschnitt des Anschlusselements 32 pressen.

Da die Schlauchleitung 54 direkt an den Endabschnitt des Anschlusselements 32 angepresst wird, ist die Abdichtung totraumfrei. Der in Fig. 2B gezeigte Zustand entspricht der Halteposition.

Das Sicherungselement 52 ist nun in dem Spalt 51 montiert. Die Montage des Sicherungsrings 52 kann vorteilhaft durch radial nach außen von der Ringform abweichende Abschnitte 56 des Sicherungsring 52 erleichtert werden, die als Führung beim Aufschieben des Sicherungsring 52 auf das Fixierungsmittel 34 wirken. Da die axiale Erstreckung oder Dicke w des Sicherungselements 52 dem minimalen axialen Versatz dₘᵢₙ entspricht, blockiert das Sicherungselement 52 das Fixierungsmittel in der Halteposition und verhindert ein versehentliches Verschieben des Fixierungsmittels 34 in die Löseposition.

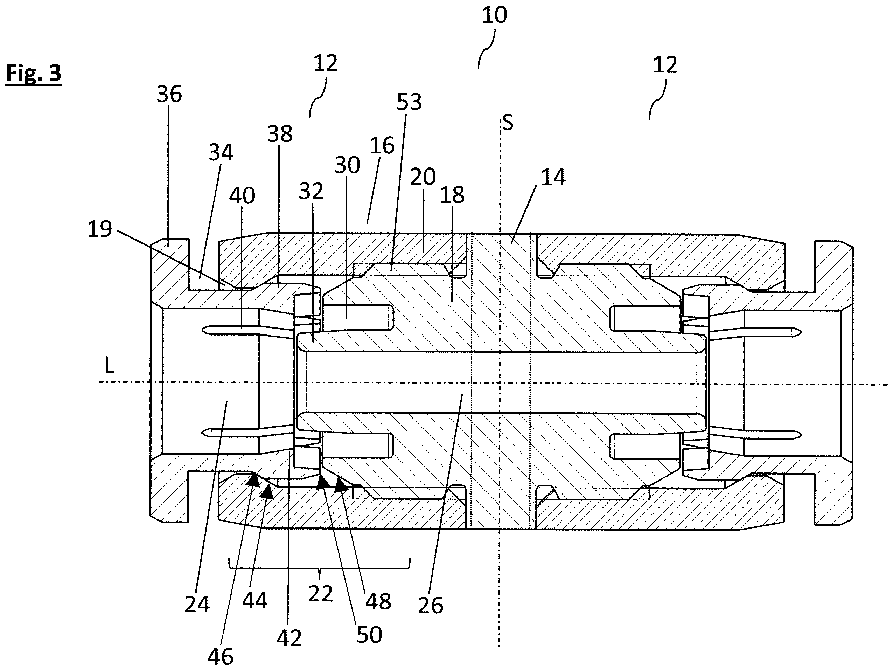

Fig. 3 zeigt eine zweite Ausführungsform einer Verbindungseinheit 10. Der Einfachheit halber wird im Folgenden besonders auf die Unterschiede zu der ersten Ausführungsform der Fig. 1 bis Fig. 2B eingegangen.

Die Verbindungseinheit 10 in Fig. 3 entspricht der Verbindungseinheit 10 in Fig. 1 mit dem Unterschied, dass der Grundkörper 16 aus einem Mantel 20 und einem Sockel 18 aufgebaut ist, die miteinander verschraubt sind (Verschraubung 53). Die Montage eines derartigen Verbindungselements 12 bzw. einer Verbindungseinheit 10 erfolgt, indem auf den Sockel 18 zuerst der Mantel 20 aufgeschraubt wird. Anschließend kann das Fixierungsmittel 34 in den Grundkörper 16 eingesteckt und daran unverlierbar befestigt werden, wie vorstehend in Bezug auf Fig. 1 beschrieben wurde.

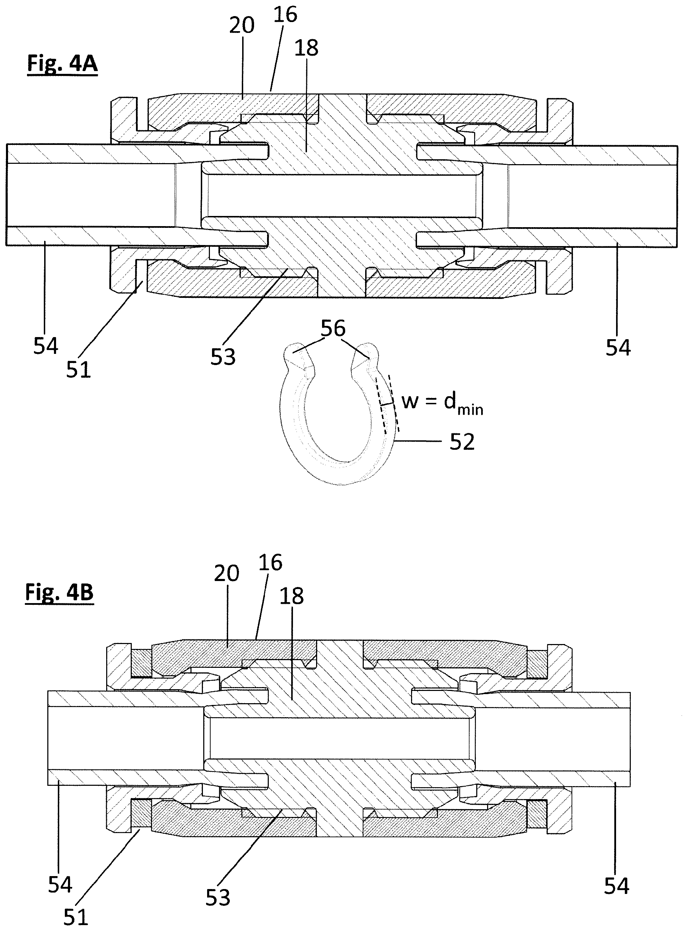

Fig. 4A und Fig. 4B zeigen (entsprechend Fig. 2A und Fig. 2B) die Verbindungseinheit 10 aus Fig. 3 in einem vormontierten Zustand bzw. einem montierten Zustand, also in der Löseposition und der Halteposition, wobei der Grundkörper 16 wieder aus einem verschraubten Sockel 18 und Mantel 20 gebildet ist.

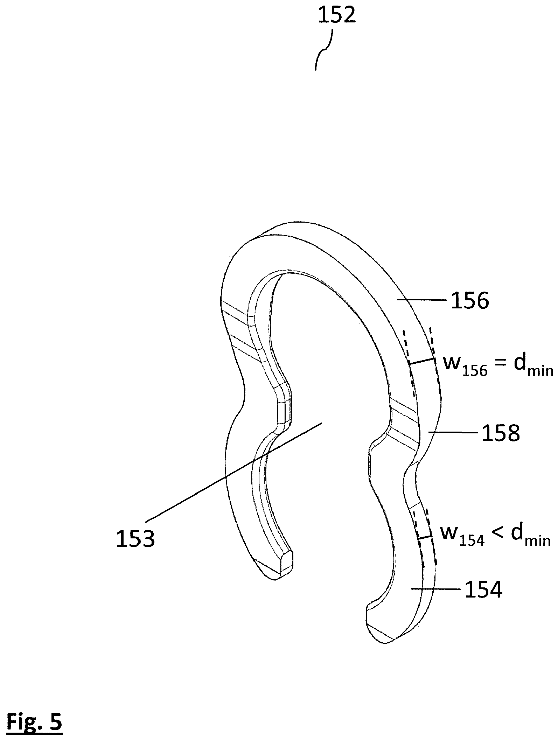

Fig. 5 zeigt eine weitere Ausführungsform eines Sicherungselements 152, welche dazu vorgesehen ist, unverlierbar bzw. dauerhaft an dem Verbindungselement 12 montiert bzw. vormontiert zu sein. In der gezeigten Ausführungsform weist das Sicherungselement 152 die Form zweier verbundener Ringe auf und kann im Wesentlichen als achtförmig bezeichnet werden, wobei ein zentraler Durchbruch 153 der Achtform das Verschieben des Sicherungselements 152 zwischen einer ersten und einer zweiten Position ermöglicht. Das Sicherungselement 152 umfasst einen ersten Bereich 154 und einen zweiten Bereich 156, die sich durch ihre jeweilige axiale Erstreckung oder Dicke w unterscheiden. Die axiale Erstreckung w₁₅₄ in dem ersten Bereich 154 ist kleiner ist als der minimale axiale Versatz dₘᵢₙ. Wenn das Sicherungselement 152 in einer ersten Position an dem Fixierungsmittel 34 des Verbindungselements 12 montiert ist, sodass der erste Bereich 154 in dem Spalt 51 liegt, kann das Fixierungsmittel 34 auf einen Abstand d < dₘᵢₙ an den Grundkörper 16 herangeführt werden. So wird eine Löseposition eingestellt. Wenn das Sicherungselement 152 in eine zweite Position an dem Fixierungsmittel 34 verschoben wird, sodass der zweite Bereich 156 mit einer axialen Erstreckung w₁₅₆ in dem Spalt 51 liegt, wird das Fixierungsmittel 34 im Abstand d = dₘᵢₙ mit dem Grundkörper 16 verspannt und so die Halteposition fixiert.

In der gezeigten Ausführung ist das Sicherungselement 152 zu einer Seite hin offen ausgebildet, sodass es nach Montage der Schlauchleitung 54 an dem Verbindungselement 12 befestigt werden kann. Das Sicherungselement 152 kann aber auch eine rundum geschlossene Form aufweisen.

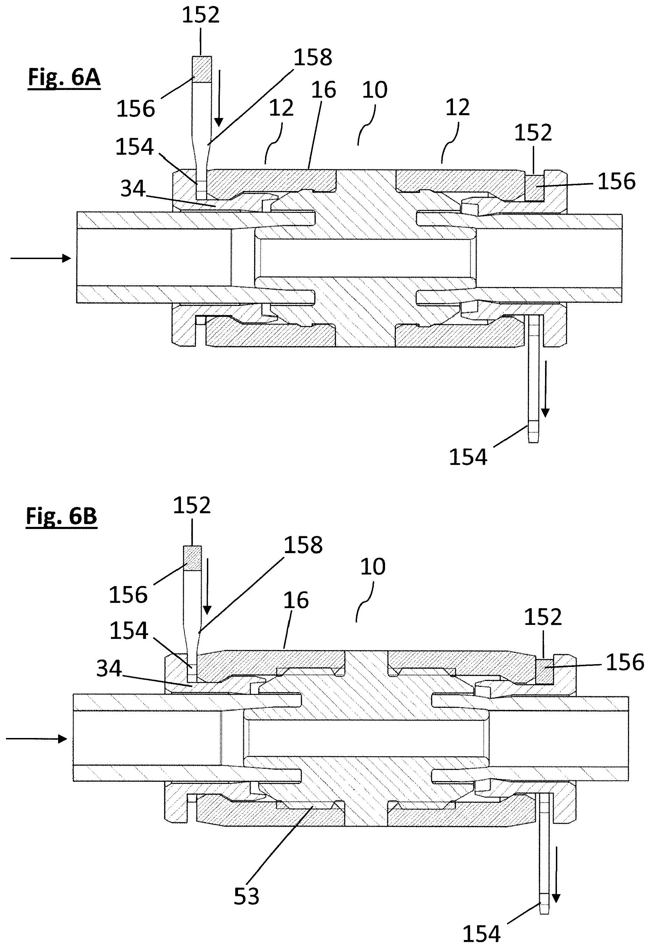

Der Übergang zwischen dem ersten Bereich 154 mit der axialen Erstreckung w₁₅₄ und dem zweiten Bereich 156 mit der axiale Erstreckung w₁₅₆ kann, wie in Fig. 5 und in Fig. 6A und Fig. 6B gezeigt, kontinuierlich erfolgen (Schräge 158). Dabei ergibt sich eine Art zusätzliche Steuerfläche an dem Sicherungselement 152. Ein Verschieben des Sicherungselements 152 von der ersten Position in die zweite Position kann entsprechend dazu genutzt werden, um das Fixierungsmittel 34 relativ zu dem Grundkörper 16 von der Löseposition in die Halteposition zu verschieben.

Fig. 6A und Fig. 6B zeigen eine Verbindungseinheit 10 der ersten Ausführungsform aus Fig. 1 bzw. eine Verbindungseinheit 10 der zweiten Ausführungsform aus Fig. 3 mit jeweils zwei Sicherungselementen 152, die dauerhaft und unverlierbar mit je einem zugehörigen Verbindungselement 12 verbunden sind. Fig. 6A und Fig. 6B zeigen jeweils links die Verbindungseinheit 10 in einem vormontierten Zustand, in dem der erste Bereich 154 des Sicherungselements 152 zwischen Grundkörper 16 und Fixierungsmittel 34 liegt. Der Abstand zwischen Grundkörper 16 und Fixierungsmittel 34 ist kleiner als der minimale axiale Versatz dₘᵢₙ, was einer Löseposition entspricht. Entsprechend sind die Klemmzungen 38 des Fixierungsmittels 34 radial aufgeweitet und der Endabschnitt der Schlauchleitung 54 ist axial bewegbar.

Durch Verschieben des Sicherungselements 152 (wie mit Pfeilen angedeutet), wird ein Abstand d = dₘᵢₙ zwischen dem Grundkörper 16 und dem Fixierungsmittel 34 eingestellt, wie in Fig. 6A und Fig. 6B jeweils rechts dargestellt ist. Der zweite Bereich 156 des Sicherungselements 152 liegt nun zwischen dem Grundkörper 16 und dem Kragen 36 des Fixierungsmittels 34 und blockiert das Verbindungselement 12 in der Halteposition.

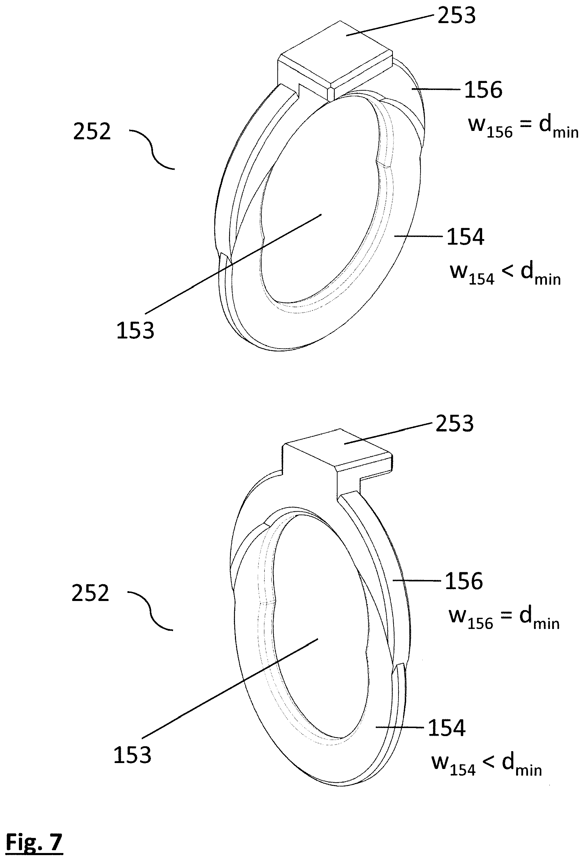

Fig. 7 zeigt eine zweite Ausführungsform eines vormontierbaren Sicherungselements 252, welches eine in Umfangsrichtung geschlossene Form aufweist. Die Montage dieses Sicherungselements 252 an dem Verbindungselement 12 kann in diesem Fall nicht mehr nach dem Einsetzen der Schlauchleitung 54 in das Verbindungselement 12 erfolgen. Stattdessen wird das Sicherungselement 252 bei der Montage von Grundkörper 16 und Fixierungsmittel 34 unverlierbar an dem Verbindungselement 12 vormontiert, indem das Fixierungsmittel 34 durch den zentralen Durchbruch 153 in dem Sicherungselement 252 in den Grundkörper 16 eingebracht wird.

Das Sicherungselement 252 hat die angedeutete Form einer Acht und weist einen ersten Bereich 154 auf, dessen axiale Erstreckung kleiner als der minimale axiale Versatz dₘᵢₙ ist, sowie einen zweiten Bereich 156, dessen axiale Erstreckung dem minimalen axialen Versatz dₘᵢₙ entspricht. Der erste Bereich 154 ist dabei so ausgebildet, dass der Spalt 51 in vollem Umfang auf die axiale Entfernung w₁₅₄, die kleiner als der minimale axiale Versatz dₘᵢₙ ist, eingestellt werden kann. Dies entspricht einer ersten Position des Sicherungselements 252 und stellt die Löseposition des Verbindungselements 12 her. Das Sicherungselement 252 kann aus der ersten Position in eine zweite Position bewegt werden, in der der zweite Bereich 156 zwischen Grundkörper 16 und Fixierungsmittel 34 wirksam wird, was der Halteposition des Fixierungsmittels entspricht. In der zweiten Position wirkt in einem ersten Teilbereich zwischen dem Grundkörper 16 und dem Kragen 36 des Fixierungsmittels 34 die axiale Ausdehnung w₁₅₆ des zweiten Bereichs 156, die dem minimalen axialen Versatz dₘᵢₙ entspricht. In einem zweiten Teilbereich zwischen dem Grundkörper 16 dem Kragen 36 des Fixierungsmittels 34 entspricht die axiale Erstreckung des Sicherungselements 252 noch der axialen Erstreckung des ersten Bereichs w₁₅₄. Die Wirkung von w₁₅₆ in dem ersten Teilbereich ist allerdings ausreichend, um das Fixierungsmittel 34 und den Grundkörper 16 relativ zueinander in der Halteposition zu fixieren.

Die zweite Ausführungsform des vormontierbaren Sicherungselements 252 weist eine kompaktere Konstruktion auf als das vormontierbare Sicherungselement 152 aus Fig. 5. Die Mittelpunkte der zwei verbundenen Ringe des Sicherungselements 252 liegen näher beisammen. Entsprechend ist die Distanz, um die das Sicherungselement 252 verschoben wird, um zwischen der ersten Position und der zweiten Position zu wechseln, geringer als beim Sicherungselement 152. Entsprechend ist auch der Abschnitt des Sicherungselements 252, der in einem vormontierten Zustand und einem montierten Zustand über den Durchmesser des Grundkörpers 16 hinausragt, kleiner. Das kann je nach Anwendung vorteilhaft sein.

Die Bedienung des Sicherheitselements 252 wird durch einen Handhabungsabschnitt 253 erleichtert.

### Bezugszeichenliste

- 10: Verbindungseinheit
- 12: Verbindungselement
- 14: Kopplungsstück
- 16: Grundkörper
- 18: Sockel
- 19: Einführhilfe
- 20: Mantel
- 22: Aufnahmeabschnitt
- 24: Eingangsöffnung
- 26: Ausgangsöffnung
- 30: Aufnahmeraum
- 32: Anschlusselement
- 33: Befestigungsabschnitt
- 34: Fixierungsmittel
- 36: Kragen
- 38: Klemmzungen
- 40: Aussparungen zwischen Klemmzungen
- 42: Klemmkante
- 44, 46, 48, 50: Steuerelemente
- 51: Spalt
- 52: Sicherungselement
- 53: Verschraubung
- 54: Schlauchleitung
- 56: Führungsbereich des Sicherungselements
- 58: dem Führungsbereich gegenüberliegender Bereich des Sicherungselements
- 152: vormontierbares Sicherungselement
- 153: Durchbruch
- 154: erster Bereich mit axialer Erstreckung d < dₘᵢₙ
- 156: zweiter Bereich mit axialer Erstreckung d = dₘᵢₙ
- 158: Schräge
- 252: zweite Ausführungsform eines vormontierbaren Sicherungselements
- 253: Handhabungsabschnitt
- w: axiale Erstreckung des Sicherungselements
- d: axiale Erstreckung des Spalts 51
- dₘᵢₙ: minimaler axialer Versatz
- L: Längsachse des Verbindungselements
- S: Spiegelebene der Verbindungseinheit

## Patentansprüche

1. Verbindungselement (12) für eine Schlauchleitung (54), umfassend
einen Grundkörper (16) mit einer Längsachse (L), der einen Aufnahmeabschnitt (22), insbesondere einen Aufnahmeraum zur Aufnahme eines Endabschnitts der Schlauchleitung (54) definiert, wobei der Aufnahmeabschnitt (22) ein Anschlusselement (32) aufweist, auf das der Endabschnitt der Schlauchleitung (54) aufschiebbar oder aufsteckbar ist,
ein Fixierungsmittel (34), das die Schlauchleitung (54) außenseitig umfasst und relativ zu dem Grundkörper (16) axial zwischen einer Halteposition und einer Löseposition bewegbar ist,
eine Klemmeinrichtung, die dazu ausgebildet ist, bei einer axialen Relativbewegung zwischen dem Grundkörper (16) und dem Fixierungsmittel (34) aus der Löseposition in die Halteposition zumindest einen Abschnitt des Fixierungsmittels (34) nach radial innen zu drängen, um den Endabschnitt der Schlauchleitung (54) zumindest abschnittsweise gegen den Anschlussabschnitt (32) zu pressen, und
ein Sicherungselement (52) zum Sichern des Fixierungsmittels (34) in der Halteposition.

2. Verbindungselement (12) nach Anspruch 1,
**dadurch gekennzeichnet, dass**
das Fixierungsmittel (34) zumindest abschnittsweise in den Aufnahmeabschnitt (22) des Grundkörpers (16) ragt.

3. Verbindungselement (12) nach Anspruch 1 oder Anspruch 2,
**dadurch gekennzeichnet, dass**
das Fixierungsmittel (34) derart ausgebildet ist, dass die Schlauchleitung (54) in der Halteposition durch das Fixierungsmittel (34) in dichtende Anlage mit einem dem Fixierungsmittel (34) zugewandten Endabschnitt des Anschlusselements (32) bringbar ist.

4. Verbindungselement (12) nach zumindest einem der vorstehenden Ansprüche,
**dadurch gekennzeichnet, dass**
das Fixierungsmittel (34) eine radial innen liegende Klemmkante und/oder Klemmfläche (42) aufweist, die in der Halteposition in Eingriff mit der Außenseite der Schlauchleitung (54) bringbar ist.

5. Verbindungselement (12) nach zumindest einem der vorstehenden Ansprüche,
**dadurch gekennzeichnet, dass**
das Fixierungsmittel (34) eine oder mehrere sich axial erstreckende Klemmzungen (38) aufweist, die in radialer Richtung federnd auslenkbar sind.

6. Verbindungselement (12) nach zumindest einem der vorstehenden Ansprüche,
**dadurch gekennzeichnet, dass**
der Grundkörper (16) zweiteilig ausgebildet ist und einen Sockel (18) und einen Mantel (20) aufweist, die mittels Verschrauben, Aufstecken, Aufpressen, Verrasten oder anderweitig miteinander verbunden sind.

7. Verbindungselement (12) nach zumindest einem der vorstehenden Ansprüche,
**dadurch gekennzeichnet, dass**
die Klemmeinrichtung zumindest ein erstes Steuerelement (44) und zumindest ein zweites Steuerelement (46) umfasst, wobei das erste Steuerelement (44) radial innenseitig in dem Grundkörper (16) angeordnet ist und das zweite Steuerelement (46) radial außenseitig an dem Fixierungselement (34) angeordnet ist und wobei die Steuerelemente (44, 46) derart zusammenwirken, dass bei einer axialen Relativbewegung zwischen dem Grundkörper (16) und dem Fixierungsmittel (34) aus der Löseposition in die Halteposition zumindest ein Abschnitt des Fixierungsmittels (34) nach radial innen gedrängt wird.

8. Verbindungselement (12) nach zumindest einem der vorstehenden Ansprüche,
**dadurch gekennzeichnet, dass**
eine Löseeinrichtung vorgesehen ist, die zumindest ein drittes Steuerelement (48) und zumindest ein viertes Steuerelement (50) umfasst, wobei das dritte Steuerelement (48) in dem Aufnahmeabschnitt (22) angeordnet ist und das vierte Steuerelement (50) an dem Fixierungselement (34), insbesondere an seinem dem Grundkörper (16) zugewandten Ende angeordnet ist, und wobei die Steuerelemente (48, 50) derart zusammenwirken, dass bei einer axialen Relativbewegung zwischen dem Grundkörper (16) und dem Fixierungsmittel (34) aus der Halteposition in die Löseposition zumindest ein Abschnitt des Fixierungsmittels (34) nach radial außen gedrängt wird.

9. Verbindungselement (12) nach Anspruch 7 oder Anspruch 8,
durch gekennzeichnet, dass
das erste Steuerelement (44) und/oder das zweite Steuerelement (46) und/oder das dritte Steuerelement (48) und/oder das vierte Steuerelement (50) jeweils zumindest eine, insbesondere eben ausgebildete Steuerfläche umfasst, die geneigt oder schräg zu der Längsachse (L) angeordnet ist.

10. Verbindungselement (12) nach zumindest einem der vorstehenden Ansprüche,
**dadurch gekennzeichnet, dass**
das Fixierungsmittel (34) an einem der Klemmeinrichtung abgewandten Endabschnitt einen sich in radialer Richtung erstreckenden Kragen (36) aufweist.

11. Verbindungselement (12) nach zumindest einem der vorstehenden Ansprüche,
**dadurch gekennzeichnet, dass**
das Sicherungselement (52), insbesondere ein abschnittsweise offener Sicherungsring, in der Halteposition in axialer Richtung zwischen einem Abschnitt des Fixierungsmittels (34), insbesondere dem Kragen (36) des Fixierungsmittels (34) und einem Endabschnitt des Grundkörpers (16) einsetzbar ist und eine axiale Erstreckung (w) aufweist, die einem minimalen axialen Versatz (dₘᵢₙ) des Fixierungsmittels (34) relativ zu dem Grundkörper (16) zwischen der Halteposition und der Löseposition entspricht.

12. Verbindungselement (12) nach Anspruch 11,
**dadurch gekennzeichnet, dass**
das Sicherungselement (52) einen ersten Bereich (154) und einen zweiten Bereich (156) umfasst, die eine unterschiedliche axiale Erstreckung (w) aufweisen, wobei die axiale Erstreckung (w) des ersten Bereichs (154) kleiner als der minimale axiale Versatz (dₘᵢₙ) ist und wobei die axiale Erstreckung (w) des zweiten Bereichs (156) zumindest im Wesentlichen dem minimalen axialen Versatz (dₘᵢₙ) entspricht.

13. Verbindungseinheit (10) mit zumindest zwei Verbindungselementen (12) nach zumindest einem der vorstehenden Ansprüche.
